(19) Europäisches Patentamt
European Patent Office
Office européen des brevets

(11) **EP 1 403 099 B1**

(12) **FASCICULE DE BREVET EUROPEEN**

(45) Date de publication et mention
de la délivrance du brevet:
**11.02.2009 Bulletin 2009/07**

(51) Int Cl.:
***B60C 23/04*** *(2006.01)*

(21) Numéro de dépôt: **03292339.3**

(22) Date de dépôt: **24.09.2003**

(54) **Système de contrôle de la pression des pneumatiques des roues d'un véhicule automobile**

Reifendruck- Überwachungssystem für die Räder eines Kraftfahrzeuges

Tire pressure controlling system for the wheels of a motor vehicle

(84) Etats contractants désignés:
**DE ES FR GB IT**

(30) Priorité: **25.09.2002 FR 0211843**

(43) Date de publication de la demande:
**31.03.2004 Bulletin 2004/14**

(73) Titulaire: **JOHNSON CONTROLS AUTOMOTIVE ELECTRONICS**
**95523 Cergy Pontoise (FR)**

(72) Inventeurs:
• **Hernando, Serge**
**95800 Cergy (FR)**
• **Peghaire, Jean-Pierre**
**95100 Argenteuil (FR)**
• **Pinard, Thierry**
**92380 Garches (FR)**

(74) Mandataire: **Bloch, Gérard et al**
**Cabinet Bloch & Associés**
**23bis, rue de Turin**
**75008 Paris (FR)**

(56) Documents cités:
**EP-A- 1 052 119**

## Description

La présente invention concerne les systèmes de contrôle de la pression des pneumatiques des roues des véhicules automobiles comprenant, sur chaque roue, un capteur de pression et un émetteur pour transmettre la pression à un organe de contrôle.

Dans ces systèmes, que l'on désigne dans le domaine par TPMS pour Tire Pressure Monitoring System, les signaux émis par les capteurs de pression comportent des données qui permettent leur identification. Si l'on ne changeait jamais les roues d'un véhicule, un simple apprentissage initial, en usine, de l'appariement des signaux et des roues, permettrait de déterminer la localisation des capteurs par rapport au châssis du véhicule. Cette détermination est nécessaire pour localiser les pneumatiques défectueux.

Cependant, comme les roues d'un véhicule sont de temps à autre changées de position et interverties, le problème de la localisation de la roue sur lequel est monté le capteur reste posé.

Des solutions ont déjà été proposées, voir par exemple l'exposé du document EP 1 052 119 A1, qui montre le préambule de la revendication 1. En particulier, la Demanderesse décrit dans la demande de brevet FR 0116368 un système de contrôle de la pression des pneumatiques dans lequel on compare des vitesses de rotation calculées à partir de données fournies par les capteurs de pression à celles déterminées par des capteurs fixes de vitesse de rotation de roue dont on connaît la localisation. Il s'agit notamment pour ces derniers des capteurs du système anti-blocage de roues, ABS (Anti-Blocking System). Le système ABS utilise un capteur propre à chaque roue donnant sa position angulaire sous forme d'impulsions. Celles-ci correspondent à des distances parcourues par la roue de l'ordre de quelques centimètres.

On sait que les roues d'un véhicule ne tournent pas toutes à la même vitesse. Une différence dans la pression des pneumatiques par exemple ou bien dans le degré d'usure de la bande de roulement entraîne une différence du diamètre des roues donc de la vitesse de rotation. La dynamique du véhicule, la répartition de la charge, la température sont aussi des facteurs influençant la vitesse de rotation des roues les unes par rapport aux autres.

On met donc à profit ces écarts pour procéder à cette détermination. Dans ce but, on calcule la différence entre la vitesse de chaque capteur fixe et celle calculée à partir des données fournies par les capteurs de pression. Ainsi, on peut associer à chacun des capteurs fixes, le capteur de pression dont l'écart de vitesse calculée est le plus faible. Ce système est avantageux dans la mesure où il utilise des moyens existants, donc sans surcoût. En outre, il se révèle être fiable compte tenu de la qualité des capteurs fixes du système anti-blocage de roues.

Cependant, les cas ne sont pas rares où les vitesses mesurées sont très proches les unes des autres. La convergence du calcul n'est alors pas rapide et le temps de réaction du système relativement long ; on a compté jusqu'à 60 minutes. Les capteurs de pression sont alimentés par des batteries qui sont situées à l'intérieur des pneumatiques. Il est souhaitable de limiter autant que possible leur consommation en énergie pour augmenter la durée de vie du produit. Une limitation de la durée d'émission des capteurs est donc avantageuse.

La demanderesse s'est donc fixé comme objectif d'améliorer le moyen de localisation des roues dans un système de surveillance de la pression des pneus par un moyen permettant de réduire la durée d'émission des capteurs.

Conformément à l'invention, le système de contrôle de la pression des pneumatiques des roues d'un véhicule automobile avec localisation des roues, comprenant

un organe de contrôle,

un capteur de pression par roue associé à un émetteur par lequel il transmet à l'organe de contrôle un signal radio comprenant des données d'identification du capteur,

est caractérisé par le fait qu'il comprend

un moyen de détermination du déphasage entre deux signaux radio émis à deux instants distincts T1 et T2 par roue,

un moyen de détermination de l'angle de rotation, modulo $2\pi$ (Pi), parcouru par chacune des roues entre les instants T1 et T2, et

un moyen de comparaison entre les déphasages et les angles de rotation par chacune des roues.

De préférence, pour les moyens de détermination de la rotation d'angle parcourue, on utilise des capteurs de vitesse de rotation sur chacune des roues, et en particulier ceux d'un dispositif anti-blocage de roue.

La présente invention est fondée sur la constatation que l'enveloppe de modulation du signal délivré par l'émetteur radio logé dans la roue est un signal périodique dont la période est fonction de la rotation des roues. Par ailleurs le déphasage entre les signaux mesurés à deux instants donnés est une mesure de la distance parcourue par la roue modulo sa circonférence. On dispose donc d'un moyen de comparaison avec la mesure de la distance parcourue déduite d'un moyen, tel que le système ABS, de détermination de la distance parcourue par chacune des roues et que l'on peut exprimer en angle de rotation.

En comparant les distances ou les angles parcourus entre deux instants déterminés, on peut accroître à volonté la précision du calcul. Elle est fonction de la durée séparant les deux instants. On maîtrise mieux cette précision par rapport au système antérieur où l'on procède par comparaison de vitesses. Il s'ensuit que la durée de localisation des roues peut être à la fois beaucoup plus rapide et fiable.

La figure 1 représente le schéma par bloc du système de l'invention.
La figure 2 représente l'organigramme du procédé de localisation des roues.

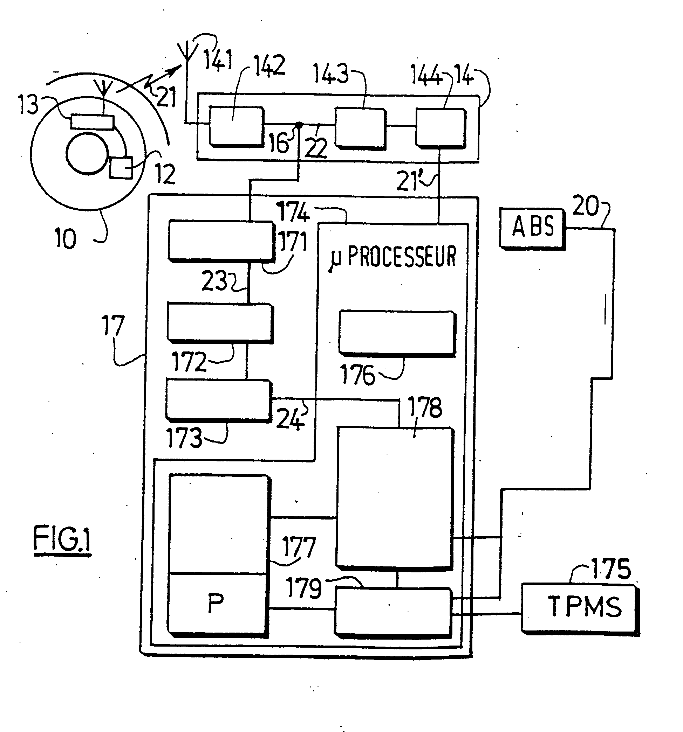

Comme on le voit sur la figure 1, on prévoit pour chaque roue 10 un ensemble comportant un capteur de pression 12 couplé à un émetteur 13. Un récepteur fixe 14 monté sur le châssis reçoit le signal 21 émis par les émetteurs 13 .

Le récepteur 14 comprend, en série, une antenne réceptrice 141, un démodulateur 142 fournissant un signal analogique 22, un filtre 143 et un circuit électronique 144 de traitement des données de pression des pneumatiques délivrant des données 21' à un organe de contrôle 17. Le récepteur fixe 14 permet de transformer le signal radio 21 en données numériques 21' comportant la pression du pneumatique et son identification.

Une dérivation 16, en sortie du démodulateur 142 par exemple, alimente l'organe de contrôle 17. Ce dernier comprend, en série, un circuit de filtrage 171, un filtre RC par exemple, fournissant un signal filtré 23, un échantillonneur-bloqueur 172 et un convertisseur analogique-numérique 173 qui transmet le signal 24 au microprocesseur 174 de l'organe de contrôle. Le microprocesseur 174 comporte des mémoires de programmes 178, 179 une mémoire de données 177 et une horloge 176.

L'organe de contrôle délivre en sortie les données de pression, d'identification et de localisation à un composant TPMS 175 de gestion de ces données. Par ailleurs, l'organe 17 reçoit des données 20 des vitesses de rotation des roues, et leur localisation, issues des capteurs ABS.

Le programme de la mémoire 178 comprend au moins une étape de calcul du déphasage des signaux de pression et le programme de la mémoire 179 comprend au moins une étape de comparaison des angles de roues. L'angle de roue est une mesure de la distance parcourue par la roue.

Le signal 21 délivré par le capteur 12 et émis par son émetteur 13 subit une modulation parasite due notamment à la carrosserie 10 du véhicule avant d'être reçu par le récepteur 14.

Par la dérivation 16, le signal 22 est aussi filtré par le filtre 171 de l'organe de contrôle 17.

En sortie du filtre 171, le signal 23 est échantillonné et numérisé à une fréquence fe d'échantillonnage par l'échantillonneur 172 qui gèle les grandeurs analogiques à des instants réguliers et le convertisseur analogique-numérique 173 qui fournit en sortie 24 des échantillons numériques du signal.

Le microprocesseur 174 transmet le contrôle au programme de la mémoire 178, lequel acquiert les échantillons numériques pendant une durée préétablie t, par exemple de 200 ms, et range les échantillons en mémoire 177. En particulier, et conformément à l'invention, il stocke dans la mémoire 177, les échantillons correspondant à deux instants T1 et T2 déterminés, d'intervalle par exemple de 6 secondes.

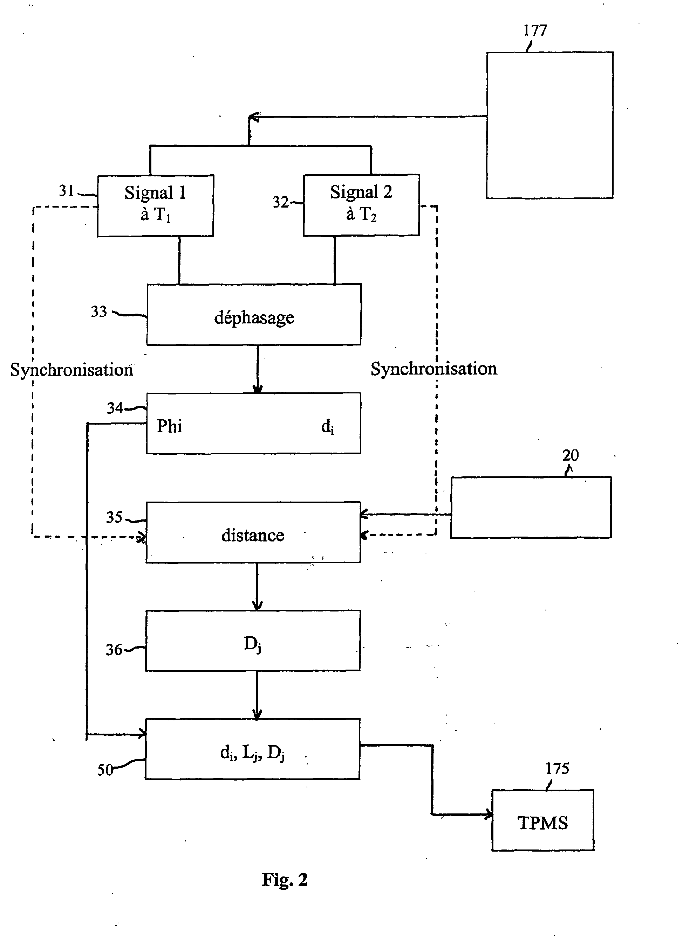

L'organigramme de la figure 2 montre les différentes étapes du programme des mémoires 178, 179. Une fois les données correspondant aux signaux périodiques des instants T1 et T2 saisies, le programme les extrait en 31 et 32 et calcule en 33 leur déphasage. Entre les instants T1 et T2 les roues ont effectué un certain nombre de tours complets plus une fraction de tour. Le déphasage entre les deux signaux émis par les capteurs de pression est une mesure de cette fraction de tour. Cette fraction de tour peut s'exprimer en angle de roue (d) que l'on calcule en 34 à portée des capteurs de chaque roue i.

La méthode de détermination du déphasage des signaux radio entre les instants T1 et T2 repose sur les principes suivants.

On distingue des deux signaux :

- une période complète dans l'intervalle [T1, T1+t1] du niveau de réception radio-fréquence S1[T1, T1+t1]
- une période complète dans l'intervalle [T2, T2 + t2] du niveau de réception radio-fréquence S2[T2, T2+t2]

Ces signaux se présentent sous la forme de tableaux de valeurs qui ont été extraites de la mémoire 177. Les temps t1 et t2 représentent une période du signal, donc correspondent à un tour de roue, et ces valeurs sont en général différentes puisque correspondent à des instants où la vitesse véhicule peut être différente, on détermine t1 et t2 par exemple selon la méthode décrite dans la demande de brevet FR 01 14140 de la demanderesse.

A partir de ces tableaux de valeurs, les traitements comprennent :

- une normalisation temporelle, qui consiste à ramener les deux tableaux de points à une dimension égale S1_Normalisé et S2_Normalisé
- un calcul d'une fonction de corrélation pour déterminer le déphasage entre les deux signaux :

$$\text{Phi} = \text{Min} \sum_{\theta=0}^{\theta=2\pi} \left| S1\_Normalisé(\theta) - S2\_Normalisé(\theta + \varphi) \right|$$

On note que la distance p parcourue, module un tour de roue, est liée à l'angle Phi par la relation

$$p = Rroue \cdot Phi \quad (\text{Rroue : valeur nominale du rayon de la roue})$$

Indépendamment du calcul d'angle de roue à partir des signaux radio, le programme procède en 35 au calcul de la distance parcourue par les roues à partir des données reçues des capteurs ABS aux instants T1 et T2. En 36, les angles de rotation des roues correspondants sont calculés à partir de leur rayon. On observe que la précision de la mesure fournie par les capteurs ABS dépend du nombre d'impulsions par tour. Par exemple un système connu compte 48 impulsions par tour. La précision sur une roue de 0,3 m de rayon est donc de 0,039 m.

Le module programme de la mémoire 179 réalise les comparaisons d'angles pour en déduire la localisation des capteurs de pression des roues.

On compare en 50 les angles de roue ($d_i$) des roues référencées i aux angles ($D_j$) des roues référencées j, fournies par les capteurs de vitesse du dispositif 20 d'antiblocage de roues. On connaît par ailleurs la localisation ($L_j$) pour chaque angle ($D_j$).

Les comparaisons des angles ($d_i$) des roues aux angles ($D_j$) des capteurs j du système ABS s'effectuent de la façon suivante :

On classe par exemple dans le sens croissant et en permanence d'une part les angles ($d_i$) des roues i et d'autre part les angles ($D_j$) des capteurs j et on forme les couples Cij d'angles ($d_i$, $D_j$); les indices étant tels que dans le classement des angles d, ($d_i$) a le même rang que ($D_j$) dans le classement des angles d. On associe alors le capteur de pression de la roue i d'identification Idi correspondant à l'angle ($d_i$) et la localisation ($L_j$) du capteur j d'angle ABS qui a donné ($D_j$), lorsque l'écart des valeurs ($D_i$) et ($D_j$) est minimal.

Pour montrer l'intérêt de la solution on a procédé à une simulation.

On considère l'évolution de deux roues sur une durée de 6 secondes avec un profil de vitesse quelconque dans cet intervalle.

Les hypothèses étaient les suivantes

Rayon de roue : 0,3 m

Ecart de rayon entre les deux roues : 0,05%

Nombre d'impulsions ABS par tour : 48.

On détermine, entre deux instants T1 et T2 séparés de 6 secondes, le déphasage D1 exprimé ici en mètre sur la première roue prise comme roue de référence et le déphasage D2 exprimé en mètre sur la deuxième roue présentant un écart de 0,05% de rayon avec la première. On considère que ces valeurs correspondent à celles que l'on obtiendrait à partir des capteurs de vitesse fixes ABS. Il s'agit de la distance parcourue par la roue, modulo le diamètre de roue

On détermine un déphasage d1 pour le même écart de 6 secondes, sur la première roue à partir d'un signal radio simulé, par exemple par une sinusoïde. On calcule le déphasage à partir d'une trame de localisation de 200 ms en T1 puis d'une seconde trame de localisation de 200ms en T2, 6 secondes plus tard.

On calcule ces distances de déphasage en mètres pour plusieurs valeurs de la vitesse du véhicule. On récapitule dans le tableau ci-dessous.

| Vitesse km/h | D1 m | d1 m | D2 m | \|D1-d1\| m | \|D2-d1\| m | Ecart des vitesses km/h |
|---|---|---|---|---|---|---|
| 40 | 1,0305 | 1,0308 | 0,9961 | 0,0003 | 0,0347 | 0,02 |
| 60 | 1,5457 | 1,5561 | 1,4941 | 0,0153 | 0,0669 | 0,03 |
| 80 | 0,176 | 0,1767 | 0,1072 | 0,0007 | 0,0695 | 0,04 |
| 100 | 0,6912 | 0,7069 | 0,6052 | 0,0157 | 0,1017 | 0,05 |
| 120 | 1,2065 | 1,2075 | 1,1032 | 0,001 | 0,1043 | 0,06 |

On constate que la valeur minimale qui en résulte se trouve dans la colonne \|D1-d1\| qui désigne bien la roue référencée 1.

On constate aussi par cette simulation que la méthode permet de distinguer deux roues présentant un écart de rayon aussi faible que 0,05%. A 40 km/h l'écart entre les deux roues est de 0,0347 m; il est à la limite de la précision de mesure par ABS qui est de 0,0393 m. A 60 km/h, il est largement au-dessus.

## Revendications

1. Système de contrôle de la pression des pneumatiques des roues d'un véhicule automobile avec localisation des roues, comprenant un organe de contrôle (17), un capteur de pression (12) par roue i associé à un émetteur (13) par lequel il transmet à l'organe de contrôle un signal radio comprenant des données d'identification du capteur, **caractérisé par le fait qu'**il comprend :

   - un moyen de détermination (178) du déphasage (di) entre deux signaux radio émis à deux instants distincts (T1 et T2) par roue i,
   - un moyen de détermination de l'angle de rotation (Dj), module $2\pi$, parcouru par chacune des roues j entre les deux instants (T1 et T2),
   - un moyen (179) de comparaison entre les déphasages (di) et les angles de rotation (Dj).

2. Système selon la revendication 1 dont les moyens de détermination de la rotation d'angle parcourue par chaque roue comprennent des moyens (20) de détermination de la vitesse de chaque roue.

3. Système selon la revendication 2 dont les moyens (20) sont les capteurs de vitesse du système ABS du véhicule.

4. Système selon l'une des revendications précédentes, dont le moyen de contrôle (17) comprend un moyen de stockage des données numériques aux deux instants (T1 et T2) correspondant aux signaux radio.

## Claims

1. Tyre pressure monitoring system for the wheels of a motor vehicle, with wheel locating, comprising a monitoring element (17), a pressure sensor (12) per wheel i associated with a transmitter (13) through which it transmits to the monitoring element a radio signal comprising identification data of the sensor, **characterized in that** it comprises:

   - a means (178) of determining the phase difference (di) between two radio signals transmitted at two separate instants (T1 and T2) per wheel i,
   - a means of determining the angle of rotation (Dj), module $2\pi$, travelled through by each of the wheels j between the two instants (T1 and T2) and
   - a means (179) of comparison between the phase differences (di) and the angles of rotation (Dj).

2. System according to claim 1, in which the means of determining the rotation of angle *[sic]* travelled through by each wheel comprise means (20) of determining the speed of each wheel.

3. System according to claim 2, in which the means (20) are the speed sensors of the vehicle's ABS system.

4. System according to one of the foregoing claims, in which the monitoring means (17) comprises a means of storing digital data at the two instants (T1 and T2) corresponding to the radio signals.

## Patentansprüche

1. System zur Drucküberwachung von Luftreifen der Räder eines Kraftfahrzeugs mit Lokalisierung der Räder, umfassend ein Überwachungsglied (17), einen Drucksensor (12) pro Rad i, der einem Sender (13) zugeordnet ist, durch den er ein Funksignal an das Überwachungsglied übermittelt, das Identifizierungsdaten des Sensors enthält, **dadurch gekennzeichnet, dass** das System Folgendes umfasst:

   - ein Mittel (178) zur Bestimmung der Phasenverschiebung (di) zwischen zwei Funksignalen, die zu zwei unterschiedlichen Zeitpunkten (T1 und T2) durch das Rad i gesendet worden sind,
   - ein Mittel zur Bestimmung des Drehwinkels (Dj), Modul 2n, den jedes der Räder j zwischen den beiden Zeitpunkten (T1 und T2) durchlaufen hat; und
   - ein Mittel (179) zum Vergleich zwischen den Phasenverschiebungen (di) und den Drehwinkeln (Dj).

2. System nach Anspruch 1, wobei die Mittel zur Bestimmung des Drehwinkels, der von jedem Rad durchlaufen wurde, Mittel (20) zur Bestimmung der Geschwindigkeit jedes Rads umfassen.

3. System nach Anspruch 2, wobei die Mittel (20) Geschwindigkeitssensoren des ABS-Systems des Fahrzeugs sind.

4. System nach einem der vorhergehenden Ansprüche, wobei die Überwachungsmittel (17) ein Mittel zum Speichern der digitalen Daten zu den beiden Zeitpunkten (T1 und T2), die den Funksignalen entsprechen, umfassen.

FIG.1

177

31 — Signal 1
à $T_1$

32 — Signal 2
à $T_2$

33 — déphasage

Synchronisation    Synchronisation

34 — Phi                    $d_i$

20

35 — distance

36 — $D_j$

50 — $d_i, L_j, D_j$

175

TPMS

**Fig. 2**

**RÉFÉRENCES CITÉES DANS LA DESCRIPTION**

**Documents brevets cités dans la description**

- EP 1052119 A1
- FR 0116368
- FR 0114140